# EUROPÄISCHE PATENTSCHRIFT

(11) **EP 3 738 493 B1**
(45) Veröffentlichungstag und Bekanntmachung des Hinweises auf die Patenterteilung: **24.11.2021**
(21) Anmeldenummer: 20172912.6
(22) Anmeldetag: 05.05.2020
(51) Int. Cl.: A47L 5/12, A47L 9/28, A47L 11/24, A47L 11/40

(54) **SYSTEM AUS EINEM BODENBEARBEITUNGSGERÄT, EINEM IN EINER UMGEBUNG DES BODENBEARBEITUNGSGERÄTES BEFINDLICHEN OBJEKT, EINER DETEKTIONSEINRICHTUNG UND EINER STEUEREINRICHTUNG**
SYSTEM COMPRISING A SOIL WORKING IMPLEMENT, AN OBJECT IN THE VICINITY OF THE SOIL WORKING IMPLEMENT, A DETECTION DEVICE AND A CONTROL DEVICE
SYSTÈME CONSTITUÉ D'UNE MACHINE DE TRAITEMENT DU SOL, D'UN OBJET SE TROUVANT DANS UN ENVIRONNEMENT DE LA MACHINE DE TRAITEMENT DU SOL, D'UN DISPOSITIF DE DÉTECTION ET D'UN DISPOSITIF DE COMMANDE

(30) Priorität: 13.05.2019 DE 102019112433
(43) Veröffentlichungstag der Anmeldung: 18.11.2020
(73) Patentinhaber: Vorwerk & Co. Interholding GmbH, 42275 Wuppertal (DE)
(72) Erfinder: Ortmann, Roman, 47057 Duisburg (DE)
(74) Vertreter: Müller, Enno

(56) Entgegenhaltungen:
- EP-A1- 3 416 017
- US-A1- 2018 029 809

## Beschreibung

### Gebiet der Technik

Die Erfindung betrifft ein System aus einem Bodenbearbeitungsgerät, einem in einer Umgebung des Bodenbearbeitungsgerätes befindlichen Objekt, welches einen Objektteilbereich und eine Verlagerungseinrichtung zum automatischen Verlagern des Objektteilbereiches aufweist, einer Detektionseinrichtung, welche geeignet ist, eine Anwesenheit des Bodenbearbeitungsgerätes in einem Detektionsbereich der Detektionseinrichtung zu detektieren, und einer Steuereinrichtung zum Generieren eines Steuerbefehls für die Verlagerungseinrichtung in Abhängigkeit von dem Detektionsergebnis der Detektionseinrichtung.

### Stand der Technik

Bodenbearbeitungsgeräte der vorgenannten Art sind beispielsweise als Reinigungsgeräte wie Staubsauger, Wischgeräte oder dergleichen, oder auch als Poliergeräte, Rasenmähgeräte oder ähnliches bekannt.

Beispiele sind in der EP3416017A1 und der US2018/029809A1 zu finden.

Darüber hinaus sind Objekte mit automatischen Verlagerungseinrichtungen, beispielsweise Türöffner für Schrank- oder Raumtüren, bekannt, wobei die Verlagerungseinrichtung einem automatischen Öffnen eines Objektteilbereiches auf Anforderung dient. Der Verlagerungseinrichtung ist eine Detektionseinrichtung zugeordnet, welche eine Bewegung in einem Detektionsbereich der Detektionseinrichtung detektieren kann, beispielsweise eine Bewegung eines bewegten Körperteils eines Nutzers oder auch eines manuell von einem Nutzer bewegten oder sich selbsttätig fortbewegenden Bodenbearbeitungsgerätes. Die der Verlagerungseinrichtung zugeordnete Detektionseinrichtung kann beispielsweise eine akustische oder optische Detektionseinrichtung sein, die mittels Ultraschall oder Licht arbeitet. Auf diese Weise ist es beispielsweise einem Nutzer des Objektes möglich, mittels einer Bewegung seines Fußes ein Signal zum Öffnen einer Schublade oder Tür zu geben.

Nachteilig bei den vorgenannten Systemen ist, dass auch andere bewegte Objekte, beispielsweise ein Bodenbearbeitungsgerät, dessen Bewegung von einer Detektionseinrichtung des Systems ebenso detektiert werden kann, eine Verlagerung des verlagerbaren Objektteilbereiches bewirken. Wenn beispielsweise ein sich selbsttätig fortbewegendes Bodenbearbeitungsgerät den Detektionsbereich der Detektionseinrichtung durchquert, gibt die Steuereinrichtung des Systems einen Steuerbefehl zum Betätigen der Verlagerungseinrichtung des Objektes aus, was dann zu einem ungewünschten Verlagern des Objektteilbereiches führt. Insbesondere ist es möglich, dass das Bodenbearbeitungsgerät dadurch von dem verlagerten Objektteilbereich eingeklemmt oder beschädigt wird.

### Zusammenfassung der Erfindung

Ausgehend von dem vorgenannten Stand der Technik ist es daher Aufgabe der Erfindung, eine Beeinträchtigung oder Beschädigung eines Bodenbearbeitungsgerätes durch automatisch verlagerbare Objektteilbereiche zu verhindern.

Zur Lösung der vorgenannten Aufgabe wird vorgeschlagen, dass der Steuerbefehl für die Verlagerungseinrichtung geeignet ist, die Verlagerungseinrichtung zu deaktivieren, so dass eine Verlagerung des Objektteilbereiches auch bei Anwesenheit des Bodenbearbeitungsgerätes in dem Detektionsbereich verhindert ist.

Erfindungsgemäß ist das System nun eingerichtet, die Verlagerungseinrichtung für den verlagerbaren Objektteilbereich abzuschalten, auch für den Fall, dass ein Bodenbearbeitungsgerät in den Detektionsbereich der Detektionseinrichtung hineinfährt bzw. sich auf den verlagerbaren Objektteilbereich zubewegt. Die Detektionseinrichtung des Systems detektiert zwar beispielsweise die Anwesenheit eines Bodenbearbeitungsgerätes in der Umgebung des Objektes, insbesondere dessen Bewegung auf das Objekt zu, veranlasst aber, dass eine automatische Verlagerung des Objektteilbereiches unterbleibt, um das Bodenbearbeitungsgerät vor Beschädigungen durch den bewegten Objektteilbereich zu schützen. Der Steuerbefehl der Steuereinrichtung deaktiviert die Verlagerungseinrichtung, so dass diese den Objektteilbereich des Objektes nicht mehr verlagern kann, und zwar unabhängig davon, ob ein Bodenbearbeitungsgerät durch den Detektionsbereich der Detektionseinrichtung fährt oder ein Nutzer beispielsweise eine Hand- und/oder Fußbewegung zur Verlagerung des Objektteilbereiches ausführt. Die Detektionseinrichtung weist vorzugsweise einen Detektionsbereich auf, der einen Teilbereich einer Bodenfläche überspannt, auf welcher sich das Bodenbearbeitungsgerät hin und her bewegt, so dass die Detektionseinrichtung eine Bewegung des Bodenbearbeitungsgerätes in diesem Detektionsbereich feststellen kann. Die Detektionseinrichtung kann einen Ultraschallsensor, Magnetsensor, optischen Sensor oder andere aufweisen.

Die Detektionseinrichtung des Systems kann eine lokale Detektionseinrichtung des Objektes sein, alternativ jedoch auch eine externe Detektionseinrichtung, welche vorzugsweise über ein Heimkommunikationsnetzwerk in das erfindungsgemäße System eingebunden ist. Ebenso kann die Steuereinrichtung des Systems eine lokale Steuereinrichtung des Bodenbearbeitungsgerätes sein, oder alternativ auch eine zu dem Bodenbearbeitungsgerät externe Steuereinrichtung, welche beispielsweise einen separaten Teilnehmer eines Heimkommunikationsnetzwerkes darstellt.

Insbesondere kann vorgesehen sein, dass das Bodenbearbeitungsgerät und das Objekt korrespondierende Datenkommunikationseinrichtungen zur drahtlosen Kommunikation miteinander aufweisen, und/ oder dass das System ein Kommunikationsnetzwerk mit einem Access Point aufweist, wobei der Access Point und eine Datenkommunikationseinrichtung des Bodenbearbeitungsgerätes und/oder Objektes eingerichtet ist, über eine drahtlose Kommunikationsverbindung miteinander zu kommunizieren. Das System kann somit für eine unterschiedlich ausgestaltete Kommunikation zwischen dem Bodenbearbeitungsgerät und dem Objekt ausgebildet sein. Gemäß einer ersten Ausführung können das Bodenbearbeitungsgerät und das Objekt direkt über korrespondierende Datenkommunikationseinrichtungen miteinander kommunizieren, so dass eine Steuereinrichtung des Bodenbearbeitungsgerätes unmittelbar einen Steuerbefehl an die Verlagerungseinrichtung des Objektes übermitteln kann, welcher die Verlagerungseinrichtung deaktiviert. Gemäß einer weiteren Ausführung kann das System ein Kommunikationsnetzwerk aufweisen, in welches die Datenkommunikationseinrichtungen eines oder mehrerer Bodenbearbeitungsgeräte und eines oder mehrerer Objekte als Teilnehmer eingebunden sind. Dieses Kommunikationsnetzwerk weist einen Access Point auf, an welchen die Datenkommunikationseinrichtungen Informationen übermitteln können und von welchem die Datenkommunikationseinrichtungen Informationen empfangen können. Die Kommunikation zwischen einem Bodenbearbeitungsgerät und einem Objekt des Netzwerkes erfolgt somit nicht unmittelbar, sondern über den Access Point des Netzwerkes. Eine Datenkommunikationseinrichtung des Bodenbearbeitungsgerätes und/oder des Objektes kann beispielsweise ein WLAN-Modul, ein Bluetooth-Modul, ein ZigBee-Modul oder ähnliches sein. Grundsätzlich muss eine Protokoll-Kompatibilität zwischen den Datenkommunikationseinrichtungen des Systems gegeben sein.

Es kann vorgesehen sein, dass das Objekt einen lokalen Access Point aufweist, oder dass das System einen zentralen Access Point aufweist, mit welchem eine Datenkommunikationseinrichtung des Bodenbearbeitungsgerätes verbindbar ist, um einen Steuerbefehl an die Verlagerungseinrichtung zu übermitteln. Der Access Point des Kommunikationsnetzwerkes kann somit entweder ein lokaler Access Point des Objektes sein, oder ein zentraler Access Point des Systems, welcher beispielsweise einem Server des Heimnetzwerkes zugeordnet ist. Mit diesem lokalen oder zentralen Access Point kann sich die Datenkommunikationseinrichtung des Bodenbearbeitungsgerätes verbinden, um den Steuerbefehl an die Verlagerungseinrichtung des Objektes zu übermitteln. In dem Fall, dass das Objekt einen eigenen, lokalen Access Point aufweist, kann sich die Datenkommunikationseinrichtung des Bodenbearbeitungsgerätes direkt mit dem Access Point des Objektes verbinden und die Verlagerungseinrichtung mittels Übermittlung eines Steuerbefehls deaktivieren. Im Falle eines zentralen Access Points meldet sich die Datenkommunikationseinrichtung des Bodenbearbeitungsgerätes an dem zentralen Access Point an und sendet Steuerbefehle über das gemeinsame Heimkommunikationsnetzwerk, beispielsweise per WLAN, Bluetooth oder ZigBee, an die Verlagerungseinrichtung des Objektes, um diese zu deaktivieren.

In dem Fall, dass die Steuereinrichtung eine externe Einrichtung des Systems ist, welche insbesondere kein Element des Bodenbearbeitungsgerätes ist, kann die Steuereinrichtung beispielsweise Teil eines zentralen Servers sein, an welchen ein oder mehrere Bodenbearbeitungsgeräte Informationen übermitteln. Diese Informationen können insbesondere einen aktuellen Betriebsstatus des Bodenbearbeitungsgerätes angeben. Die Steuereinrichtung empfängt diese Informationen und generiert daraufhin einen Steuerbefehl für die Verlagerungseinrichtung des Objektes, welcher die Verlagerungsfunktion deaktiviert, so dass der Objektteilbereich trotz Anwesenheit eines Bodenbearbeitungsgerätes in dem Detektionsbereich der Detektionseinrichtung nicht verlagert wird.

Es kann vorgesehen sein, dass der Steuerbefehl der Steuereinrichtung eine Zeitvorgabe für eine Zeitspanne enthält, in welcher die Verlagerungseinrichtung deaktiviert ist. Gemäß dieser Ausgestaltung wird die Verlagerungseinrichtung nur für die vordefinierte Zeitspanne deaktiviert, so dass nach Ablauf dieser Zeitspanne eine automatische Reaktivierung erfolgt und die Verlagerungseinrichtung den Objektteilbereich in üblicher Art und Weise wieder verlagern kann, wenn eine Bewegung in dem Detektionsbereich der Detektionseinrichtung detektiert wird. Alternativ ist es jedoch auch möglich, dass die Steuereinrichtung des Systems, beispielsweise eine lokale Steuereinrichtung des Bodenbearbeitungsgerätes, einen Steuerbefehl an die Verlagerungseinrichtung des Objektes übermittelt, mit welchem die Verlagerungseinrichtung wieder aktiviert wird und die automatische Verlagerung des Objektteilbereiches wieder ausgeführt werden kann.

Über die Datenkommunikationseinrichtung des Objektes können des Weiteren Parameter für eine Einstellung der Verlagerungseinrichtung übermittelt werden. Ein derartiger Parameter der Verlagerungseinrichtung kann beispielsweise neben der Deaktivierung und Reaktivierung eine von der Verlagerungseinrichtung ausgeübte Öffnungskraft sein. Des Weiteren ist es auch möglich, Informationen an die Detektionseinrichtung des Systems zu übermitteln, nämlich beispielsweise über eine der Detektionseinrichtung zugeordnete Datenkommunikationseinrichtung. Ein übermittelter Parameter kann beispielsweise eine einzustellende Detektionsgenauigkeit der Detektionseinrichtung sein. Sofern das die Verlagerungseinrichtung aufweisende Objekt sowohl die Detektionseinrichtung als auch die Steuereinrichtung aufweist, können die einzustellenden Parameter insgesamt von einer Datenkommunikationseinrichtung des Bodenbearbeitungsgerätes an die Datenkommunikationseinrichtung des Objektes übermittelt werden, um die entsprechenden Einstellungen an der Verlagerungseinrichtung und/oder der Detektionseinrichtung vorzunehmen.

Im Sinne der Erfindung kann das Objekt des Systems eine Tür oder ein Möbelstück sein. Des Weiteren kann der verlagerbare Objektteilbereich dieses Objektes dann ein Türflügel, eine Klappe oder eine Schublade sein. Die Verlagerungseinrichtung des Objektes übernimmt somit die Funktion eines Türöffners, Schubladenöffners oder dergleichen.

Des Weiteren kann vorgesehen sein, dass das Bodenbearbeitungsgerät einen Sensor zur Detektion von Objekten in der Umgebung des Bodenbearbeitungsgerätes aufweist. Bei dem Sensor kann es sich beispielsweise um einen Hindernissensor handeln, welcher Abstände zu Objekten misst, die in der Umgebung des Bodenbearbeitungsgerätes vorhanden sind. Derartige Sensoren können beispielsweise Ultraschallsensoren oder optische Sensoren sein. Darüber hinaus kann das Bodenbearbeitungsgerät auch eingerichtet sein, ein Datenkommunikationssignal von einem Objekt zu empfangen, welches eine Information darüber gibt, ob das Objekt eine Verlagerungseinrichtung für einen verlagerbaren Objektteilbereich aufweist.

Insbesondere kann die Steuereinrichtung des Systems insbesondere eingerichtet sein, anhand der von dem Sensor des Bodenbearbeitungsgerätes aufgenommenen Objektdaten zu ermitteln, ob das Objekt eine Verlagerungseinrichtung aufweist, und in dem Fall, dass das Objekt eine Verlagerungseinrichtung aufweist, einen Steuerbefehl zur Deaktivierung der Verlagerungseinrichtung an das Objekt übermitteln. Gemäß dieser Ausgestaltung kann die Steuereinrichtung des Systems gezielt einen Steuerbefehl für nur ein einziges von mehreren in der Umgebung vorhandenen Objekten übermitteln, so dass die weiteren, nicht betroffenen Objekte des Systems, weiter eine aktivierte Verlagerungseinrichtung aufweisen. Vorzugsweise wird dabei nur die Verlagerungseinrichtung desjenigen Objektes deaktiviert, in deren unmittelbarer Umgebung sich das Bodenbearbeitungsgerät befindet. Alternativ kann einer zentralen Steuereinrichtung des Systems ein Sensor zur Detektion von Objekten zugeordnet sein oder eine zentrale Speichereinrichtung, innerhalb welcher Informationen darüber hinterlegt sind, an welchen Orten der Umgebung sich Objekte mit verlagerbaren Objektteilbereichen befinden, so dass die Steuereinrichtung bei Erkennen einer Annäherung eines Bodenbearbeitungsgerätes an ein Objekt mit einer Verlagerungseinrichtung einen Steuerbefehl an genau dieses Objekt übermittelt, mit dem Inhalt, die Verlagerungseinrichtung zu deaktivieren, so dass eine Verlagerung des Objektteilbereiches bei Annähern des Bodenbearbeitungsgerätes an das Objekt verhindert ist.

Schließlich wird vorgeschlagen, dass das Bodenbearbeitungsgerät ein sich selbsttätig fortbewegendes Bodenbearbeitungsgerät ist, wobei das Bodenbearbeitungsgerät eine Navigationseinrichtung aufweist, welche eingerichtet ist, anhand von Objektdaten detektierter Objekte eine Umgebungskarte zu erstellen. Grundsätzlich funktioniert die Erfindung auch bei einem System, welches ein von einem Nutzer handgeführtes Bodenbearbeitungsgerät aufweist, allerdings ist die Erfindung bei sich selbsttätig fortbewegenden Bodenbearbeitungsgeräten umso vorteilhafter, da unter Umständen kein Nutzer in der Umgebung des Objektes vorhanden ist, um eine Kollision eines Objektteilbereiches mit dem Bodenbearbeitungsgerät zu verhindern. Das sich selbsttätig fortbewegende Bodenbearbeitungsgerät verfügt über eine vorzugsweise selbst erstellte Umgebungskarte, in welcher ein Grundriss der Umgebung sowie dort vorhandene Objekte verzeichnet sind. Darüber hinaus kann die Umgebungskarte zusätzlich Informationen darüber enthalten, ob die in der Umgebung vorhandenen Objekte verlagerbare Objektteilbereiche aufweisen, die automatisch durch eine Verlagerungseinrichtung verlagerbar sind. Sofern sich das Bodenbearbeitungsgerät auf einem vordefinierten Fortbewegungspfad durch die Umgebung bewegt, kann die Steuereinrichtung des Systems, insbesondere eine eigene Steuereinrichtung des Bodenbearbeitungsgerätes, im Voraus einen Steuerbefehl zur Deaktivierung der Verlagerungseinrichtung an ein Objekt übermitteln, in dessen Umgebung sich das Bodenbearbeitungsgerät bewegt. Somit kann vorteilhaft eine Kollision von verlagerten Objektteilbereichen mit dem Bodenbearbeitungsgerät verhindert werden. Nach anschließendem Entfernen des Bodenbearbeitungsgerätes von dem Objekt kann die Steuereinrichtung dann erneut einen Steuerbefehl an die Verlagerungseinrichtung übermitteln, mit welchem die Verlagerungseinrichtung wieder aktiviert wird. Alternativ ist es möglich, dass der eingangs an die Verlagerungseinrichtung übermittelte Steuerbefehl bereits eine Zeitvorgabe dafür enthält, für welche Zeitspanne die Verlagerungseinrichtung deaktiviert sein soll.

### Kurze Beschreibung der Zeichnungen

Im Folgenden wird die Erfindung anhand von Ausführungsbeispielen näher erläutert. Es zeigen:
- Fig. 1: ein System mit einem Bodenbearbeitungsgerät und einem Objekt, welches einen automatisch verlagerbaren Objektteilbereich aufweist,
- Fig. 2: eine weitere Ausführungsform eines erfindungsgemäßen Systems.

### Beschreibung der Ausführungsformen

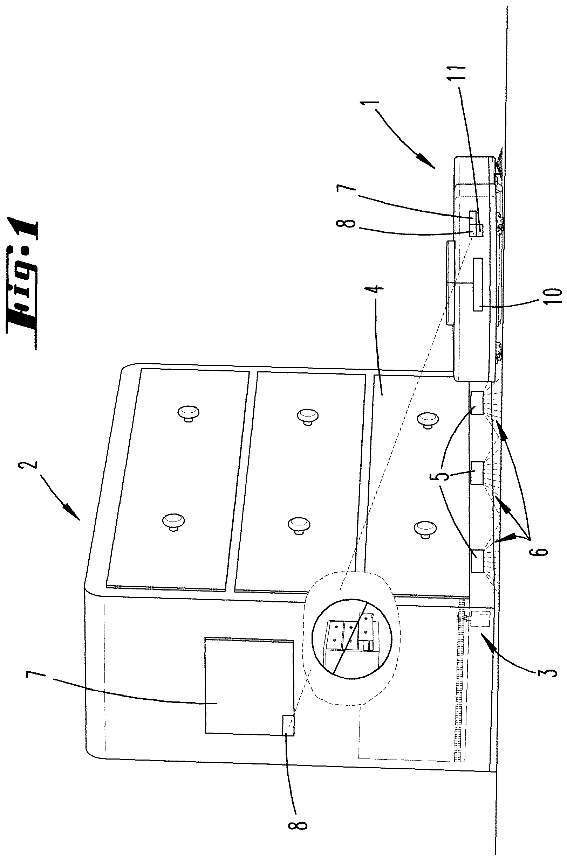

Figur 1 zeigt ein System aus einem Bodenbearbeitungsgerät 1 und einem Objekt 2. Das Bodenbearbeitungsgerät 1 ist hier ein sich selbsttätig fortbewegendes Reinigungsgerät, welches über eine Navigationseinrichtung 11 zur selbsttätigen Navigation und Selbstlokalisierung in der Umgebung verfügt. Der Navigationseinrichtung 11 ist ein Sensor 10 zur Detektion von Objekten 2 in der Umgebung zugeordnet. Hier ist der Sensor 10 beispielsweise Teil einer Abstandsmesseinrichtung, die Abstände zu Objekten 2 der Umgebung messen kann. Anhand der Messdaten des Sensors 10 kann die Navigationseinrichtung 11 eine Umgebungskarte erstellen, welche Objekte 2 und andere Hindernisse in der Umgebung des Bodenbearbeitungsgerätes 1 enthält. Des Weiteren verfügt das Bodenbearbeitungsgerät 1 über eine Datenkommunikationseinrichtung 8, beispielsweise ein WLAN-Modul oder Bluetooth-Modul.

Das dargestellte System kann weitere (nicht dargestellte) Bodenbearbeitungsgeräte 1 und/oder weitere Objekte 2 aufweisen. Die Art der Bodenbearbeitungsgeräte 1 ist nicht auf die dargestellte Ausführung beschränkt, vielmehr kann es sich bei dem Bodenbearbeitungsgerät 1 alternativ um ein manuell von einem Nutzer geführtes Bodenbearbeitungsgerät 1 handeln. Als Bodenbearbeitungsgeräte 1 kommen beispielsweise Reinigungsgeräte, Poliergeräte, Schleifgeräte, Mähgeräte oder ähnliches in Frage. Im Sinne von Bodenbearbeitungsgeräten 1 können jedoch auch fortbewegbare oder sich selbsttätig fortbewegende Servicegeräte, insbesondere Transportgeräte oder Überwachungsgeräte, verstanden werden, die keine eigentliche Bodenbearbeitung ausführen. Die dargestellten Ausführungen der Erfindung bleiben davon unberührt.

Das in der Umgebung des Bodenbearbeitungsgerätes 1 vorhandene Objekt 2 ist hier beispielsweise ein Schubladenschrank mit einer Mehrzahl von Schubladen, welche verlagerbare Objektteilbereiche 4 des Objektes 2 sind. Die in der Darstellung unterste Schublade ist beispielhaft mit einer Verlagerungseinrichtung 3 ausgestattet, welche automatisch von einer Steuereinrichtung 7 des Objektes 2 betätigbar ist. Die Verlagerungseinrichtung 3 weist hier beispielsweise einen Linearantrieb auf, welcher die Schublade, d. h. den verlagerbaren Objektteilbereich 4, aus dem Körper des Schubladenschranks herausschieben kann, um einem Nutzer das Öffnen des Schubladenschrankes abzunehmen. In einem unteren Teil des Objektes 2 sind mehrere Detektionseinrichtungen 5 angeordnet, hier beispielsweise Ultraschallsensoren oder Infrarotsensoren, deren Detektionsbereiche 6 ausgehend von den Detektionseinrichtungen 5 nach unten auf eine Bodenfläche gerichtet sind. Üblicherweise kann ein Nutzer des Objektes 2 zum Öffnen des verlagerbaren Objektteilbereiches 4 beispielsweise seinen Fuß in den Detektionsbereich 6 einer der Detektionseinrichtungen 5 bewegen, woraufhin die Detektionseinrichtung 5 ein Detektionssignal an die Steuereinrichtung 7 des Objektes 2 sendet. Die Steuereinrichtung 7 wertet das Detektionssignal aus und erkennt, dass eine Bewegung in dem Detektionsbereich 6 der Detektionseinrichtung 5 detektiert wurde. Daraufhin generiert die Steuereinrichtung 7 einen Steuerbefehl für die Verlagerungseinrichtung 3, um die Verlagerungseinrichtung 3 zu veranlassen, den Objektteilbereich 4 zumindest teilweise aus dem Objekt 2 heraus zu verlagern, so dass in dem vorliegenden Beispiel die Schublade offensteht.

Damit ein in den Detektionsbereich 6 einer Detektionseinrichtung 5 eintretendes Bodenbearbeitungsgerät 1 nicht ebenfalls ein Verlagern des Objektteilbereiches 4 hervorrufen kann, was dann gegebenenfalls zu einer Beschädigung oder einem Einklemmen des Bodenbearbeitungsgerätes 1 führen könnte, ist das Bodenbearbeitungsgerät 1 eingerichtet, der Steuereinrichtung 7 des Objektes 2 mitzuteilen, dass eine Betätigung der Verlagerungseinrichtung 3 zu unterbleiben hat. Das Bodenbearbeitungsgerät 1 verfügt dazu über eine Steuereinrichtung 7, die einen Steuerbefehl für das Objekt 2, generiert, der geeignet ist, die Verlagerungseinrichtung 3 des Objektes 2 zu deaktivieren, so dass eine Verlagerung des Objektteilbereiches 4 auch dann unterbleibt, wenn das Bodenbearbeitungsgerät 1 in einen Detektionsbereich 6 einer Detektionseinrichtung 5 des Objektes 2 hineinfährt. Die Steuereinrichtung 7 des Bodenbearbeitungsgerätes 1 kann mit dem Steuerbefehl beispielsweise eine Vorgabe für eine Zeitspanne übermitteln, in welcher die Verlagerungseinrichtung 3 des Objektes 2 deaktiviert sein soll. Die Steuereinrichtung 7 des Bodenbearbeitungsgerätes 1 kann diese Zeitspanne anhand einer voraussichtlichen Verweildauer des Bodenbearbeitungsgerätes 1 im Bereich der Detektionseinrichtungen 5 kalkulieren, d. h. in Abhängigkeit von der Zeitspanne, in welcher ein mögliches Kollisionsrisiko zwischen dem Bodenbearbeitungsgerät 1 und dem verlagerbaren Objektteilbereich 4 besteht.

Eine weitere Ausführung der Erfindung kann vorsehen, dass die Steuereinrichtung 7 des Bodenbearbeitungsgerätes 1 auf eine Umgebungskarte der Umgebung zugreift, welche auch als Navigationsgrundlage für die Navigationseinrichtung 11 dient. Die Steuereinrichtung 7 des Bodenbearbeitungsgerätes 1 kann dann beispielsweise bei einem vorbestimmten Bewegungspfad des Bodenbearbeitungsgerätes 1 durch die Umgebung, im Voraus ermitteln, dass und gegebenenfalls wann das Bodenbearbeitungsgerät 1 in einen Detektionsbereich 6 einer Detektionseinrichtung 6 einfahren wird. In der Umgebungskarte ist vorzugsweise, den Objekten 2 zugeordnet, eine Information hinterlegt, ob das jeweilige Objekt 2 einen verlagerbaren Objektteilbereich 4 aufweist, welcher mit dem Bodenbearbeitungsgerät 1 kollidieren könnte. Die Steuereinrichtung 7 des Bodenbearbeitungsgerätes 1 kann einem Objekt 2 mit einem verlagerbaren Objektteilbereich 4 dann im Voraus einen Steuerbefehl übermitteln, der die Verlagerungseinrichtung 3 des jeweiligen Objektes 2 deaktiviert.

Unabhängig von einer Umgebungskarte des Bodenbearbeitungsgerätes 1, beispielsweise auch wenn es sich bei dem Bodenbearbeitungsgerät 1 um ein manuell von einem Nutzer geführtes Bodenbearbeitungsgerät 1 handelt, könnte ein Sensor 10 des Bodenbearbeitungsgerätes 1 bei Annäherung an ein Objekt 2 auch detektieren, ob das Objekt 2 eine Verlagerungseinrichtung 3 aufweist. Beispielsweise kann die Datenkommunikationseinrichtung 8 des Bodenbearbeitungsgerätes 1 von einer entsprechenden Datenkommunikationseinrichtung 8 des Objektes 2 eine Information darüber empfangen, wenn das Objekt 2 eine Verlagerungseinrichtung 3 für einen Objektteilbereich 4 aufweist. Gemäß einer Ausführung kann das Objekt 2 beispielsweise einen optischen Code aufweisen, welcher von dem Sensor 10 des Bodenbearbeitungsgerätes 1 ausgelesen werden kann und einen Hinweis auf den verlagerbaren Objektteilbereich 4 liefert. Das Bodenbearbeitungsgerät 1 kann alternativ auch eine Abfrage per drahtloser Datenkommunikation an eine Datenkommunikationseinrichtung 8 des Objektes 2 senden, welche mit einer entsprechenden Antwort beantwortet wird. In diesem Fall kann das Objekt 2 beispielsweise einen RFID-Chip aufweisen, der bei Anregung durch ein Anfragesignal des Bodenbearbeitungsgerätes 1 ein entsprechendes Antwortsignal ausgibt, das wiederum von der Steuereinrichtung 7 des Bodenbearbeitungsgerätes 1 ausgewertet werden kann.

Die Datenkommunikationseinrichtung 8 des Bodenbearbeitungsgerätes 1 kann einen Steuerbefehl an die Datenkommunikationseinrichtung 8 des Objektes 2 übermitteln, um die Verlagerungseinrichtung 3 zu deaktivieren. Gemäß einer Ausführung ist es auch möglich, dass die Datenkommunikationseinrichtung 8 des Objektes 2 einen lokalen Access Point (in Figur 1 nicht dargestellt) bereitstellt, an welchem sich die Datenkommunikationseinrichtung 8 des Bodenbearbeitungsgerätes 1 anmelden kann, insbesondere mit einer ID, gegebenenfalls zusätzlich unter Nutzung eines Passworts. Gemäß dieser Ausgestaltung kann nicht irgendein Bodenbearbeitungsgerät 1 oder ein anderes Gerät einen Steuerbefehl an die Datenkommunikationseinrichtung 8 des Objektes 2 übermitteln, sondern nur ein solches Bodenbearbeitungsgerät 1, welches dazu befugt sind. Es kann somit ausgeschlossen werden, dass ungewünscht eine Deaktivierung der Verlagerungseinrichtung 3 des Objektes 2 erfolgt.

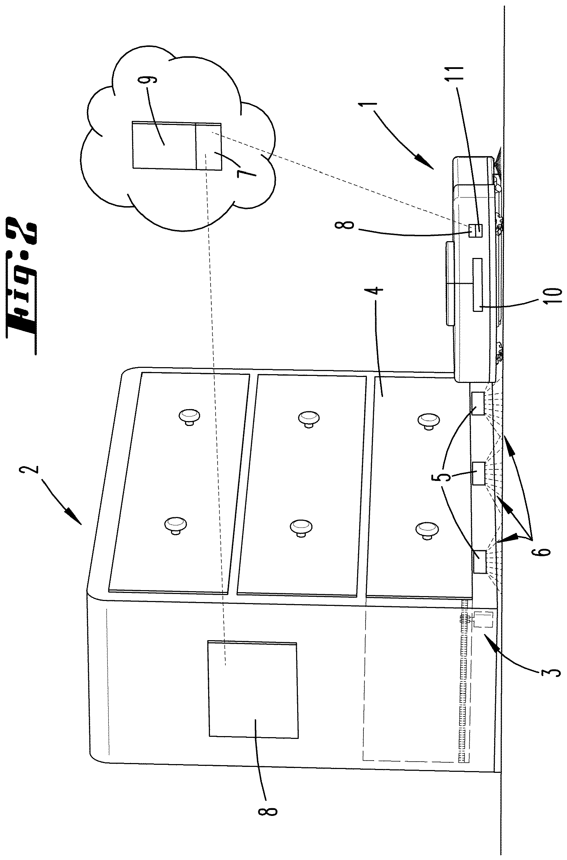

Figur 2 zeigt ein weiteres Ausführungsbeispiel eines erfindungsgernäßen Systems, dort mit einem Bodenbearbeitungsgerät 1, einem Objekt 2 und einem zentralen Access Point 9 des Systems, welcher hier beispielsweise in einen Server integriert ist. Dem zentralen Access Point 9 zugeordnet ist eine Steuereinrichtung 7. Sowohl die Datenkommunikationseinrichtung 8 des Objektes 2, als auch die Datenkommunikationseinrichtung 8 des Bodenbearbeitungsgerätes 1 stehen in drahtloser Kommunikationsverbindung mit dem Access Point 9 des Systems, um eine drahtlose Datenkommunikation, beispielsweise per WLAN, ZigBee oder dergleichen, durchzuführen. Um die Verlagerungseinrichtung 3 des Objektes 2 zu deaktivieren, sendet die Datenkommunikationseinrichtung 8 des Bodenbearbeitungsgerätes 1 in diesem Ausführungsbeispiel beispielsweise zunächst einen Steuerbefehl an den zentralen Access Point 9, woraufhin der Access Point 9 den Steuerbefehl an die Datenkommunikationseinrichtung 8 des Objektes 2 weiterleitet. Alternativ ist es auch möglich, dass das Bodenbearbeitungsgerät 1 zunächst nur eine Information über einen aktuellen Betriebsstatus und/oder Aufenthaltsort des Bodenbearbeitungsgerätes 1 an den Access Point 9 übermittelt und die eigene Steuereinrichtung 7 des Access Points 9 daraufhin einen Steuerbefehl für die Verlagerungseinrichtung 3 des Objektes 2 derart formuliert, dass die Funktion der Verlagerungseinrichtung 3 deaktiviert werden kann. Gemäß dieser Ausführung kann die Steuereinrichtung 7 des Access Points 9 über eine Umgebungskarte verfügen, in welcher die Orte von Objekten 2 mit verlagerbaren Objektteilbereichen 4 verzeichnet sind und die Steuereinrichtung 7 somit ermitteln kann, welche Objekte 2 in einem Bewegungspfad des Bodenbearbeitungsgerätes 1 existieren.

Die Ausführungsformen des Systems können des Weiteren vorsehen, dass der Nutzer via der Datenkommunikationseinrichtung 8 des Objektes 2 oder des Access Points 9 Parameter der Verlagerungseinrichtung 3 eines Objektes 2 einstellen kann, beispielsweise eine benötigte Kraft zur Verlagerung des Objektteilbereiches 4, oder eine Zeitspanne, welche für eine Deaktivierung der Verlagerungseinrichtung 3 angewendet wird, eine Genauigkeit der Detektionseinrichtungen 5, die bestimmt, wann ein Detektionssignal als ein in dem Detektionsbereich 6 der jeweiligen Detektionseinrichtung 5 vorhandenes Bodenbearbeitungsgerät 1 erkannt wird, oder ähnliches. Insgesamt kann die Kommunikation zwischen dem Bodenbearbeitungsgerät 1 und dem Objekt 2 somit direkt oder über einen zentralen Access Point 9 des Systems erfolgen, welcher Teil eines Heimkommunikationsnetzwerkes ist, in das die Datenkommunikationseinrichtungen 8 von Bodenbearbeitungsgerät 1 und Objekt 2 eingebunden sind.

### Liste der Bezugszeichen

- 1: Bodenbearbeitungsgerät
- 2: Objekt
- 3: Verlagerungseinrichtung
- 4: Objektteilbereich
- 5: Detektionseinrichtung
- 6: Detektionsbereich
- 7: Steuereinrichtung
- 8: Datenkommunikationseinrichtung
- 9: Access Point
- 10: Sensor
- 11: Navigationseinrichtung

## Patentansprüche

1. System aus einem Bodenbearbeitungsgerät (1), einem in einer Umgebung des Bodenbearbeitungsgerätes (1) befindlichen Objekt (2), welches einen Objektteilbereich (4) und eine Verlagerungseinrichtung (3) zum automatischen Verlagern des Objektteilbereiches (4) aufweist, einer Detektionseinrichtung (5), welche geeignet ist, eine Anwesenheit des Bodenbearbeitungsgerätes (1) in einem Detektionsbereich (6) der Detektionseinrichtung (5) zu detektieren, und einer Steuereinrichtung (7) zum Generieren eines Steuerbefehls für die Verlagerungseinrichtung (3) in Abhängigkeit von dem Detektionsergebnis der Detektionseinrichtung (5), **dadurch gekennzeichnet, dass** der Steuerbefehl geeignet ist, die Verlagerungseinrichtung (3) zu deaktivieren, so dass eine Verlagerung des Objektteilbereiches (4) auch bei Anwesenheit des Bodenbearbeitungsgerätes (1) in dem Detektionsbereich (6) verhindert ist.

2. System nach Anspruch 1, **dadurch gekennzeichnet, dass** die Detektionseinrichtung (5) eine Detektionseinrichtung (5) des Objektes (2) ist.

3. System nach Anspruch 1 oder 2, **dadurch gekennzeichnet, dass** die Steuereinrichtung (7) eine Steuereinrichtung (7) des Bodenbearbeitungsgerätes (1) ist.

4. System nach einem der vorhergehenden Ansprüche, **dadurch gekennzeichnet, dass** das Bodenbearbeitungsgerät (1) und das Objekt (2) korrespondierende Datenkommunikationseinrichtungen (8) zur drahtlosen Kommunikation miteinander aufweisen, und/oder dass das System ein Kommunikationsnetzwerk mit einem Access Point (9) aufweist, wobei der Access Point (9) und eine Datenkommunikationseinrichtung (8) des Bodenbearbeitungsgerätes (1) und/oder Objektes (2) eingerichtet ist, über eine drahtlose Kommunikationsverbindung miteinander zu kommunizieren.

5. System nach einem der vorhergehenden Ansprüche, **dadurch gekennzeichnet, dass** das Objekt (2) einen lokalen Access Point (9) aufweist, oder dass das System einen zentralen Access Point (9) aufweist, mit welchem eine Datenkommunikationseinrichtung (8) des Bodenbearbeitungsgerätes (1) verbindbar ist, um einen Steuerbefehl an die Verlagerungseinrichtung (3) zu übermitteln.

6. System nach einem der vorhergehenden Ansprüche, **dadurch gekennzeichnet, dass** der Steuerbefehl eine Zeitvorgabe für eine Zeitspanne enthält, in welcher die Verlagerungseinrichtung (3) deaktiviert ist.

7. System nach einem der vorhergehenden Ansprüche, **dadurch gekennzeichnet, dass** das Objekt (2) eine Tür oder ein Möbelstück und der verlagerbare Objektteilbereich (4) ein Türflügel, eine Klappe oder eine Schublade ist.

8. System nach einem der vorhergehenden Ansprüche, **dadurch gekennzeichnet, dass** das Bodenbearbeitungsgerät (1) einen Sensor (10) zur Detektion von Objekten (2) in der Umgebung des Bodenbearbeitungsgerätes (1) aufweist.

9. System nach Anspruch 8, **dadurch gekennzeichnet, dass** die Steuereinrichtung (7) eingerichtet ist, anhand der von dem Sensor (10) aufgenommenen Objektdaten zu ermitteln, ob das Objekt (2) eine Verlagerungseinrichtung (3) aufweist und in dem Fall, dass das Objekt (2) eine Verlagerungseinrichtung (3) aufweist, einen Steuerbefehl zur Deaktivierung der Verlagerungseinrichtung (3) an das Objekt (2) zu übermitteln.

10. System nach einem der vorhergehenden Ansprüche, **dadurch gekennzeichnet, dass** das Bodenbearbeitungsgerät (1) ein sich selbsttätig fortbewegendes Bodenbearbeitungsgerät (1) ist, wobei das Bodenbearbeitungsgerät (1) eine Navigationseinrichtung (11) aufweist, welche eingerichtet ist, anhand von Objektdaten detektierter Objekte (2) eine Umgebungskarte zu erstellen.

## Claims

1. A system comprised of a floor processing device (1), an object (2) located in the environment of the floor processing device (1), which has a partial object area (4) and a displacement device (3) for automatically displacing the partial object area (4), a detection device (5), which is suitable for detecting a presence of the floor processing device (1) in a detection area (6) of the detection device (5), and a control device (7) for generating a control command for the displacement device (3) as a function of the detection result of the detection device (5), **characterized in that** the control command is suitable for deactivating the displacement device (3), thereby preventing a displacement of the partial object area (4) even if the floor processing device (1) is present in the detection area (6).

2. The system according to claim 1, **characterized in that** the detection device (5) is a detection device (5) of the object (2).

3. The system according to claim 1 or 2, **characterized in that** the control device (7) is a control device (7) of the floor processing device (1).

4. The system according to one of the preceding claims, **characterized in that** the floor processing device (1) and the object (2) have corresponding data communications devices (8) for wirelessly communicating with each other, and/or that the system has a communications network with an access point (9), wherein the access point (9) and a data communications device (8) of the floor processing device (1) and/or object (2) is set up to communicate with each other via a wireless communications link.

5. The system according to one of the preceding claims, **characterized in that** the object (2) has a local access point (9), or that the system has a central access point (9), with which a data communications device (8) of the floor processing device (1) can be connected, so as to transmit a control command to the displacement device (3) .

6. The system according to one of the preceding claims, **characterized in that** the control command contains a time allowance denoting a period of time for which the displacement device (3) is deactivated.

7. The system according to one of the preceding claims, **characterized in that** the object (2) is a door or a furniture item, and the displaceable partial object area (4) is a door leaf, a flap, or a drawer.

8. The system according to one of the preceding claims, **characterized in that** the floor processing device (1) has a sensor (10) for detecting objects (2) in the environment of the floor processing device (1).

9. The system according to claim 8, **characterized in that** the control device (7) is set up for using the object data recorded by the sensor (10) to determine whether the object (2) has a displacement device (3), and in the event that the object (2) has a displacement device (3), transmit a control command for deactivating the displacement device (3) to the object (2).

10. The system according to one of the preceding claims, **characterized in that** the floor processing device (1) is an automatically moving floor processing device (1), wherein the floor processing device (1) has a navigation device (11), which is set up to generate an area map based upon object data of detected objects (2).

## Revendications

1. Système comprenant un appareil de traitement du sol (1), un objet (2) situé dans un environnement de l'appareil de traitement du sol (1), qui présente une région partielle d'objet (4) et un dispositif de déplacement (3) pour déplacer automatiquement ladite région partielle d'objet (4), des moyens de détection (5) adaptés pour détecter une présence dudit appareil de traitement du sol (1) dans une zone de détection (6) desdits moyens de détection (5), et un dispositif de commande (7) pour générer une instruction de commande pour le dispositif de déplacement (3) en fonction du résultat de détection du dispositif de détection (5), **caractérisé en ce que** l'instruction de commande est appropriée pour désactiver le dispositif de déplacement (3) de manière à empêcher un déplacement de la région partielle d'objet (4) également en présence de l'appareil de traitement du sol (1) dans la zone de détection (6).

2. Système selon la revendication 1, **caractérisé en ce que** le dispositif de détection (5) est un dispositif de détection (5) de l'objet (2).

3. Système selon la revendication 1 ou 2, **caractérisé en ce que** le dispositif de commande (7) est un dispositif de commande (7) de l'appareil de traitement du sol (1).

4. Système selon l'une des revendications précédentes, **caractérisé en ce que** l'appareil de traitement du sol (1) et l'objet (2) présentent des dispositifs de communication de données (8) correspondants pour une communication sans fil entre eux, et/ou **en ce que** le système présente un réseau de communication avec un point d'accès (9), dans lequel le point d'accès (9) et un dispositif de communication de données (8) de l'appareil de traitement du sol (1) et/ou de l'objet (2) sont configurés pour communiquer entre eux par une liaison de communication sans fil.

5. Système selon l'une des revendications précédentes, **caractérisé en ce que** l'objet (2) présente un point d'accès local (9) ou **en ce que** le système présente un point d'accès central (9) auquel un dispositif de communication de données (8) de l'appareil de traitement du sol (1) peut être connecté pour transmettre une instruction de commande au dispositif de déplacement (3).

6. Système selon l'une des revendications précédentes, **caractérisé en ce que** l'instruction de commande contient une spécification temporelle pour un laps de temps pendant lequel le dispositif de déplacement (3) est désactivé.

7. Système selon l'une des revendications précédentes, **caractérisé en ce que** l'objet (2) est une porte ou un meuble et la région partielle d'objet déplaçable (4) est un vantail de porte, une trappe ou un tiroir.

8. Système selon l'une des revendications précédentes, **caractérisé en ce que** l'appareil de traitement du sol (1) comprend un capteur (10) pour détecter des objets (2) dans l'environnement de l'appareil de traitement du sol (1).

9. Système selon la revendication 8, **caractérisé en ce que** le dispositif de commande (7) est configuré pour déterminer si l'objet (2) présente un dispositif de déplacement (3) sur la base des données d'objet enregistrées par le capteur (10) et pour transmettre à l'objet (2) une instruction de commande pour désactiver le dispositif de déplacement (3) dans le cas où l'objet (2) présente un dispositif de déplacement (3).

10. Système selon l'une des revendications précédentes, **caractérisé en ce que** l'appareil de traitement du sol (1) est un appareil de traitement du sol (1) à déplacement automatique, l'appareil de traitement du sol (1) présentant un dispositif de navigation (11) qui est conçu pour produire une carte de l'environnement sur la base de données d'objets des objets détectés (2).
